# EUROPÄISCHE PATENTANMELDUNG

(11) **EP 0 826 527 A2**
(43) Veröffentlichungstag der Anmeldung: **04.03.1998**
(21) Anmeldenummer: 97114760.8
(22) Anmeldetag: 26.08.1997
(51) Int. Cl.: B60H 1/00

(54) **Konvektor**

(30) Priorität: 03.09.1996 DE 19635731; 10.01.1997 DE 19700659
(71) Anmelder: AURORA Konrad G. Schulz GmbH & Co, 69427 Mudau (DE)
(72) Erfinder: Gruner, Roland, 74864 Fahrenbach-Robern (DE)
(74) Vertreter: Baronetzky, Klaus, Dipl.-Ing.

(57) **Zusammenfassung**

Es ist ein Konvektor (10), insbesondere für die Beheizung von Fahrzeug-Innenräumen vorgesehen, der mit eine Mehrzahl von von einem Wärmeträger (28) durchströmbaren Rohren (12) aufweist, die sich im wesentlichen parallel zueinander erstrecken und mit flächigen Wärmeübertragungselementen (14) in Wärmeleitverbindung stehen. Die Wärmeübertragungselemente (14) erstrecken sich im wesentlichen parallel zu und einstückig mit den Rohren (12).

## Beschreibung

Die Erfindung betrifft einen Konvektor gemäß dem Oberbegriff von Anspruch 1.

Die bekannten Konvektoren werden zur Raumheizung, aber auch zur Beheizung von Fahrzeugen, wie Eisenbahnwaggons, Straßenbahnwaggons und dgl., verwendet. Sie bestehen meist aus langgestreckten Rohren, die von Heißwasser durchströmt werden. An den Rohren sind Lamellen angebracht, die die Wärmetauschwirkung der Rohre verbessern sollen. Ein derartiger Konvektor ist üblicherweise mit einem Abdeckgitter versehen, sowie auch mit einer seitlichen Schutzwand, die sicherstellen soll, daß die empfindlichen Lamellen nicht durch Berührung verbogen werden.

Nachdem die Montage und die Herstellung der Lamellen recht aufwendig ist, wobei die Lamellen gestanzt werden müsssen, ggf. gekantet werden müssen, gedornt werden müssen und dann die Rohre aufgeweitet werden müssen, ist es bereits bekannt geworden, auf die Lamellen insgesamt zu verzichten und lediglich entsprechende Rohre als Wärmetauscher vorzusehen. Der Wärmetauscher-Wirkungsgrad derartiger Konvektoren ist jedoch ziemlich schlecht, so daß mit recht heißem Heizwasser als Wärmeübertragungsmedium gearbeitet werden muß, was entsprechende Energieverluste und hohe Betriebskosten verursacht.

Ferner ist es aus der DE-OS 23 14 159 bekannt geworden, Strangpreßprofile anstelle der Lamellen zu verwenden, die nach der Art von Kühlkörpern Kühlrippen aufweisen, die sich fächerförmig erstrecken. Auch die Rohre selbst können hierbei als Strangpreßprofile ausgebildet sein, die in intensiver Wärmeleitverbindung auf den Kühlkörpern aufgebracht sind. Zwar ist der Wärmübertragungs-Wirkungsgrad derartiger Konvektoren wesentlich besser als bei Konvektoren, die ohne Lamellen auskommen müssen.

Jedoch ist der Montageaufwand derartiger Konvektoren vergleichsweise groß. Auch wird eine vergleichsweise starke vertikale Luftströmung erzeugt, die der Forderung nach zugarmer Luft in einem entsprechenden Fahrzeug entgegensteht. Daher hat sich diese Lösung nicht durchgesetzt. Ferner erfordert diese Lösung ein zusätzliches Abdeckprofil, das aus Stahlblech oder ggf. ebenfalls als Strangpreßprofil ausgebildet sein kann. Dieses bedarf der separaten Befestigung, um eine gewünschte Zerstörungssicherheit zu erzielen.

Demgegenüber liegt der Erfindung die Aufgabe zugrunde, einen Konvektor gemäß dem Oberbegriff von Anspruch 1 zu schaffen, der sich preisgünstig herstellen läßt, besonders gut für den Fußraum in Fahrzeugen geeignet ist und einen vergleichsweise guten Wärmeübertragungs-Wirkungsgrad aufweist.

Diese Aufgabe wird erfindungsgemäß durch Anspruch 1 gelöst. Vorteilhafte Weiterbildungen ergeben sich aus den Unteransprüchen.

Durch die einstückige Anordnung zwischen den Rohren und den Lamellen oder Rippen oder allgemein, den Wärmeübertragungselementen, entstehen gerade bei dem Wärmeübergang zwischen dem Wärmeträger, also beispielsweise Wasser, in dem Rohr und den Wärmeübertragungselementen die minimal möglichen Übertragungsverluste. Dies bedeutet zunächst, daß mit einem vergleichsweise wenig erwärmten Wärmeträgermedium eine ziemlich hohe Temperatur an den Rippen erzielbar ist. Bereits von daher ist der Wirkungsgrad des erfindungsgemäßen Konvektors überraschend verbessert.

Dennoch ist die Fertigung insgesamt erheblich weniger arbeitsintensiv, nachdem überraschend mit lediglich einem Strangpreßprofil sowohl die Rohre für den Wärmeträger als auch die Wärmeübertragungselemente gefertigt werden können. Dies senkt die Herstellkosten drastisch, nachdem aufwendige Bearbeitungsschritte, wie bei der Anbringung von Lamellen, entfallen.

Dennoch besteht eine sehr große gestalterische Freiheit bei der Festlegung der erwünschten Profilierung. Beispielsweise können bei Bedarf auch Rohre mit elliptischem Querschnitt, die sich harmonisch in die in Form gebogener Rippen vorliegenden Wärmeübertragungselemente einfügen, realisiert werden.

Gemäß einer weiteren bevorzugten Ausgestaltung ist es vorgesehen, daß auch das erforderliche Abdeckelement für den Konvektor einstückig zu den übrigen Teilen ausgebildet ist. Überraschend lassen sich somit die drei Funktion, das Wärmeträgermedium durch den Konvektor hindurchzuleiten, einen Wärmeübertragung zur aufsteigenden Luft zu gewährleisten, und, die erforderliche mechanische Abdeckung und Lagerung bereitzustellen, mit einem einzigen preisgünstig herstellbaren Profil realisieren.

Bevorzugt ist das erfindungsgemäße Strangpreßprofil aus Aluminium oder einer Aluminiumlegierung, wobei es sich versteht, daß auch ein anderes Material mit guten Wärmeleiteigenschaften, das zudem extrudierbar ist, eingesetzt werden kann.

Erfindungsgemäß ist es besonders günstig, daß Rundungen, wie sie für die Verletzungssicherheit von im Fußraum angeordneten Konvektoren erforderlich sind, gleich in das erfindungsgemäße Strangpreßprofil integriert ausgebildet werden. Beispielsweise kann neben der oberen Abdeckwand auch eine Vorderwand integriert gefertigt werden.

Die obere Abdeckwand kann in beliebiger geeigneter Weise mit Schlitzen versehen werden, wobei es bevorzugt ist, eine spanende oder umformende Bearbeitung vorzunehmen. Beispielsweise können die Schlitze durch entsprechende Fräser kontinuierlich hergestellt werden, oder es erfolgt ein Stanzvorgang für das Ausstanzen einer Mehrzahl von Belüftungsausnehmungen, z.B. mittels an sich bekannter Rotationsstanzmaschinen.

Die bevorzugte Ausgestaltung derart, daß der Abstandshalter einstückig mit den Wärmeübertragungselementen - insbesondere etwa höhenmittig an den Profilen - ausgebildet ist, erlaubt die Verwendung besonders dünner Profile, nachdem der frei tragende Bereich dann nur etwa halb so lang wie bei endseitiger Anordnung ist.

Weitere Vorteile, Einzelheiten und Merkmale ergeben sich aus der nachfolgenden Beschreibung zweier Ausführungsbeispiele anhand der Zeichnung.

Es zeigen:
- Fig. 1: eine perspektivische, teils geschnittene und schematisierte Seitenansicht einer Ausführungsform eines erfindungsgemäßen Konvektors;
- Fig. 2: eine perspektivische, schematisierte Seitenansicht einer weiteren Ausführungsform eines erfindungsgemäßen Konvektors; und
- Fig. 3: eine Fräseranordnung zur Herstellung der Ausnehmungen in einer oberen Abdeckwand des Konvektors.

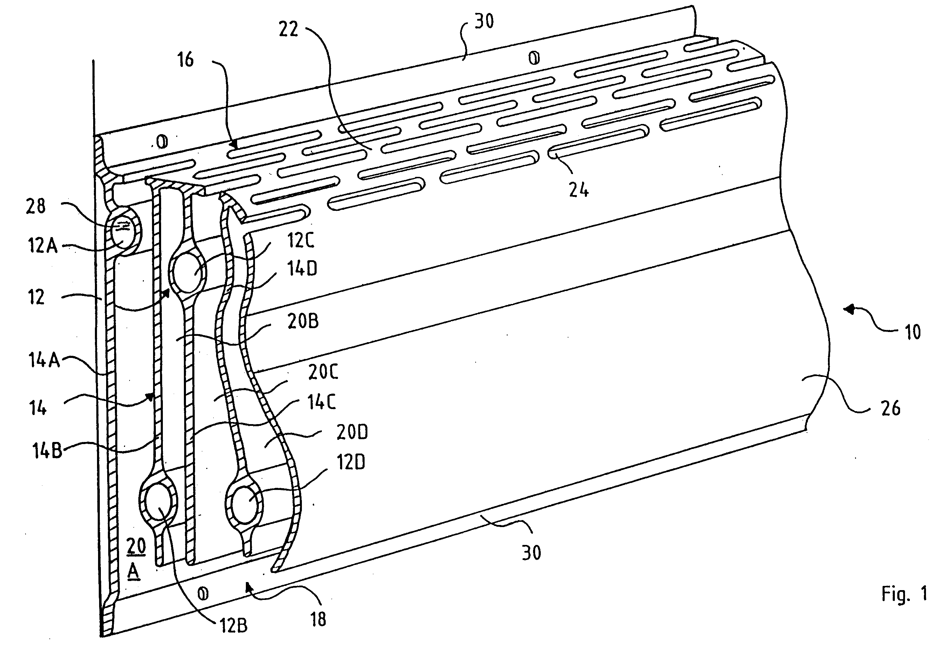

Der in Fig. 1 dargestellte Konvektor 10 weist eine Mehrzahl von Rohren 12 auf, die sich in Längsrichtung erstrecken. Die Rohre sind je im Verlauf von Wärmeübertragungselementen 14 angebracht, die im wesentlichen nebeneinander aufrecht und parallel zu den Rohren verlaufen. In der dargestellten Ausführungsform sind je vier Rohre 12 und vier Wärmeübertragungselemente 14 vorgesehen, wobei es sich versteht, daß die Anzahl der mit den Rohren 12 kombinierten Wärmeübertragungselemente 14 in weiten Bereichen an die Erfordernisse anpaßbar ist. Beispielsweise können auch mehr als ein Rohr 12 pro Wärmeübertragungselement 14 vorgesehen sein, und es kann auch ein Wärmeübertragungselement 14 ohne Rohr 12 zwischen je benachbarten Wärmeübertragungselementen 14 vorgesehen sein.

Die Rohre 12 sind - bezogen auf die je benachbarten Wärmeübertragungselemente 14 - abwechselnd oben und unten angebracht.

So ist ein Rohr 12A eines Wärmeübertragrungselements 14A oben, also im Bereich eines Auslasses 16, des Konvektors 10 angeordnet. Lediglich ein kurzes, oberes Teilstück des Wärmeübertragungselements 14A erstreckt sich oberhalb des Rohres 12A.

Das dem Wärmeübertragungselement 14A benachbarte Wärmeübertragungselement 14B weist demgegenüber das Rohr 12B in seinem unteren Bereich, also dem Einlaß 18 des Konvektors 10 benachbart auf. Das Rohr 12C des diesen benachbarten Wärmeübertragungselement 14C ist wiederum oben angeordnet, und entsprechend das Rohr 12D des Wärmeübertragungselements 14D unten.

Erfindungsgemäß ist es bevorzugt, daß die durch Konvektion erzeugte Luftströmung zwar einen geringen Strömungswiderstand hat, jedoch gerade im Bereich der Rohre besonders intensiv ist. Durch Engstellen entstehen an den besonders heißen Rohren Verwirbelungen, die der guten Wärmeübertragung dienen, während die Strömungsgeschwindigkeit im Bereich außerhalb der Rohre recht klein ist, so daß genügend Zeit besteht, den Wärmeaustausch stattfinden zu lassen.

Erfindungsgemäß ist es ferner besonders günstig, daß durch die Anordnung von Rohren sowohl unten als auch oben sowohl ein Gegenstromprinzip als auch ein Mitstromprinzip angewendet wird: Nachdem die von unten zuströmende Kaltluft durch die Erwärmung aufsteigt, arbeiten die Wärmeübertragungselemente 14A und 14C praktisch im Gegenstromprinzip, während die Wärmeübertragungselemente 14B und 14D im Mitstromprinzip arbeiten.

Nachdem jeder Luftanteil der sich zwischen den Wärmeübertragungselementen 14 ergebenden Kanäle 20A bis 20D - abgesehen von dem vordersten Kanal 20D - zumindest auch von dem benachbarten obenliegenden Rohr mit Wärme beaufschlagt wird, erfolgt insofern eine gleichmäßige Erwärmung.

Erfindungsgemäß ist es vorgesehen, bevorzugt auch eine Abdeckung 22 für den Konvektor 10 einstückig mit den weiteren Teilen des Konvektors auszubilden. Die Abdeckung 22 ist als durchbrochene Wand ausgebildet, wobei je längliche Durchbrechungen 24 sich bevorzugt an dem oberen Ende der Kanäle 20A bis 20D erstrecken und den Auslaß 16 bilden.

Es versteht sich, daß die Abmessungen der Durchbrechungen 24 so gewählt sind, daß eine Verschmutzung und Verstopfung nach Möglichkeit vermieden wird. Hierbei ist es bevorzugt, daß der erfindungsgemäße Konvektor 10 je mit gerundeten Ecken ausgestaltet ist, so daß keine Schmutzwinkel entstehen können.

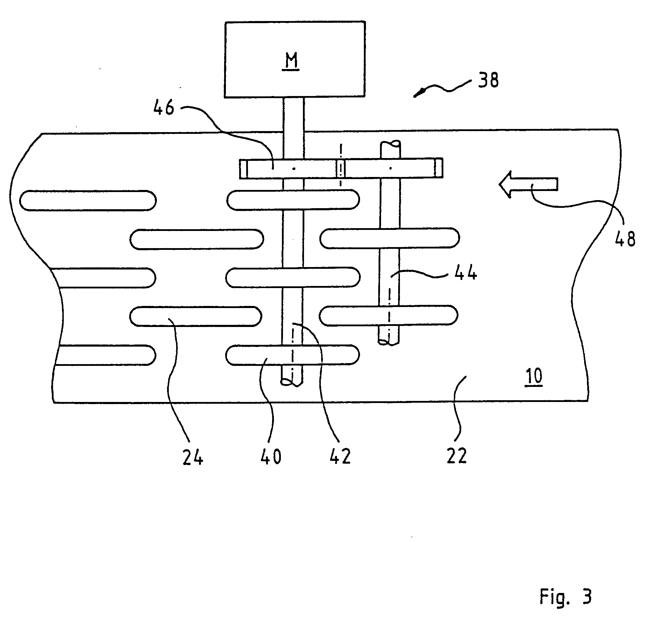

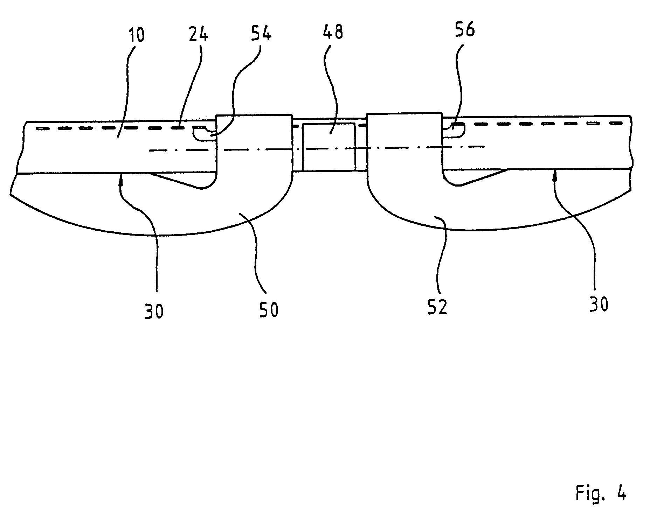

Die Herstellung des erfindungsgemäßen Konvektors 10 erfolgt über ein einziges Profil, z.B. ein Strangpreßprofil, wobei auch die Werkzeugkosten für die Herstellung des Spritzkopfes überschaubar sind. Bevorzugt ist es vorgesehen, die Durchbrechungen 24 an dem fertigen Strangpreßprofil spanend oder umformend auszubilden, wobei es grundsätzlich in Betracht kommt, über einen entsprechend geformten Stanz-Amboß und entsprechend geformte Werkzeuge die Durchbrechungen 24 auszustanzen, oder, beispielsweise mittels des in Fig. 3 dargestellten Fräsers, die Durchbrechungen kontinuierlich auszufräsen. Alternativ ist es auch möglich, die Ausnehmungen mittels Laserschneidens auszubilden.

Gemäß einer weiteren Ausgestaltung, die allerdings einen vergleichsweise aufwendigen Spritzkopf erfordert, ist es vorgesehen, die Durchbrechungen durch bei der Herstellung des Strangpreßprofil intermittierend arbeitende Schließschieber oder mitlaufende, endlos umlaufende Formen zu realisieren. Diese Ausgestaltung erfordert dann keine Nachbearbeitung, abgesehen ggf. höchstens von einem Entgraten.

Erfindungsgemäß ist es besonders günstig, daß eine Vorderwand 26 sich vor dem vordersten Wärmeübertragungselement 14D erstreckt und kein Rohr aufweist. Die Vorderwand 26 wird dennoch von dem Luftstrom in dem Kanal 20D beaufschlagt und relativ zu den Wärmeübertragungselementen 14A bis 14D gekühlt. Hierdurch ist es gewährleistet, daß kein Fahrgast mit einem Rohr unmittelbar in Berührung kommt.

Erfindungsgemäß ist es besonders günstig, daß aufgrund der besonders niedrigen Primärtemperatur des in den Rohren 12 strömenden Wärmeträgers 28 die Gesamttemperatur des erfindungsgemäßen Konvektors 10 ebenfalls gering ist. Es bedarf daher keiner weiteren Schutzmaßnahmen, um eine Berührung des erfindungsgemäßen Konvektors durch einen Fahrgast zu verhindern.

Zudem ist bevorzugt, die Vorderwand 26 doppel-S-förmig geschwungen auszubilden, so daß sie einen fußfreundlichen Grundcharakter hat.

Gemäß der in Fig. 1 dargestellten Ausgestaltung ist das Wärmeübertragungselement 14A nach oben und unten zur Bildung eines Montageflansches 30 an der Befestigungswand verlängert.

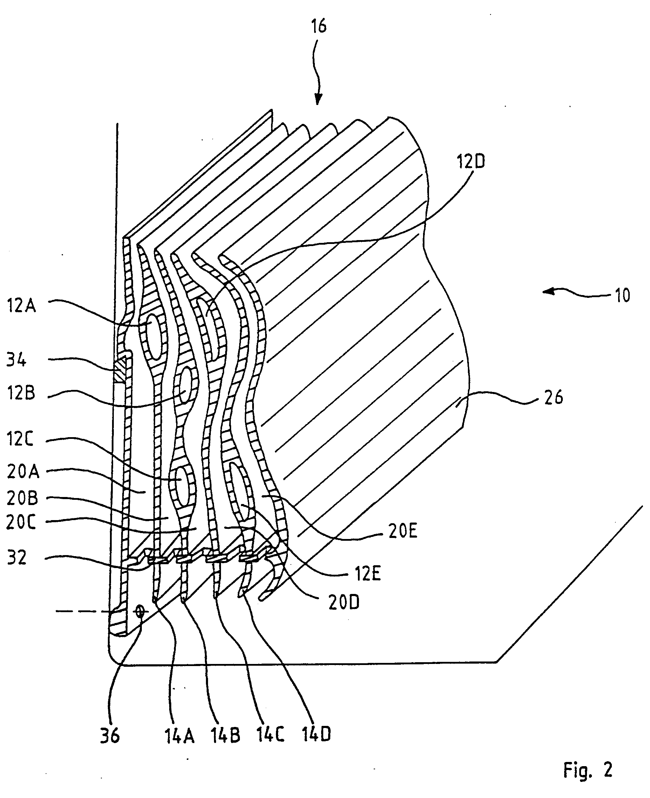

Bei der in Fig. 2 dargestellten weiteren Ausführungsform eines erfindungsgemäßen Konvektors sind Rippen oder Wärmeübertragungselemente 14A bis 14D im wesentlichen aufrecht und nebeneinander angeordnet und sind von einem Abstandshalter 32 gehalten. Bei dieser Ausgestaltung ist keine den Auslaß 16 abdeckende Abdeckung vorgesehen, so daß die Wärmeübertragungselemente 14 lediglich über den Abstandshalter 32 miteinander verbunden sind.

Jedes Wärmeübertragungselement 14A bis 14D weist mindestens ein Rohr 12A bis 12E auf, wobei in dem dargestellten Ausführungsbeispiel das Wärmeübertragungselement 14B die zwei Rohre 12B und 12C übereinander aufweist. Die Rohre sind je elliptisch ausgeführt, so daß sich die Luftströmung durch den Konvektor 10 an die Wärmeübertragungselemente 14 auch im Verlauf der Rohre besser anschmiegen kann und sich ein störungsfreies Strömungsprofil ergibt. Bevorzugt sind die vorderen Wärmeübertragungselemente und auch die Vorderwand 26 in ihrem oberen Bereich nach hinten gekrümmt, so daß eine Abdeckung durch Überlappung der Kanäle von den je benachbarten Wärmeübertragungselementen entsteht.

Es versteht sich, daß der Abstandshalter, der auch aus einer Mehrzahl benachbarter Abstandshalter bestehen kann, Durchbrechungen aufweist, die den Luftdurchtritt im unteren Bereich der Kanäle 20A bis 20E ermöglicht. Durch die relativ starke Krümmung der Vorderwand 26 entsteht zudem eine Formstabilität in Längsrichtung, die eine Materialersparnis ermöglicht.

Die Befestigung des erfindungsgemäßen Konvektors 10 erfolgt in der Ausgestaltung gemäß Fig. 2 beispielsweise mit einer verdeckten Halteschiene 34, in welche der Konvektor eingehängt ist, sowie über Schraubbefestigungen 36 an dem unteren, von den Fahrgästen fast nicht zu erreichenden äußeren Ende des Konvektors 10.

Wie aus Fig. 3 ersichtlich ist, läßt sich eine gelochte Abdeckung 22 gemäß Fig. 1 mittels eines Mehrfachfräsers 38 erzeugen, der fünf teils gegeneinander versetzte Fräswerkzeuge 40 aufweist. Die Fräswerkzeuge 40 laufen auf zwei Wellen 42 und 44, die über ein Getriebe 46 miteinander verbunden sind. Für die Erzeugung eines Satzes von Durchbrechungen 24 wird bevorzugt der Mehrfachfräser 38 einschließlich des Fräsmotors M zu dem Strangpreßprofil, das den Konvektor 10 bildet, abgesenkt, bis die Durchbrechungen 24 in der erforderlichen Größe erzeugt sind. Nach Anheben des Mehrfachfräsers 38 erfolgt ein Transport des Konvektors 10 in die Richtung des Pfeils 48, damit der nächste Satz von Durchbrechungen 24 erzeugt werden kann.

Dieser Vorgang wird periodisch wiederholt, und auf diese Weise wird ein fertiger Konvektor erzeugt.

## Patentansprüche

1. Konvektor, insbesondere für die Beheizung von Fahrzeug-Innenräumen, mit einer Mehrzahl von von einem Wärmeträger durchströmbaren Rohren, die sich im wesentlichen parallel zueinander erstrecken und die mit flächigen Wärmeübertragungselementen in Wärmeleitverbindung stehen, dadurch gekennzeichnet, daß die Wärmeübertragungselemente (14) sich im wesentlichen parallel zu und einstückig mit den Rohren (12) erstrecken.

2. Konvektor nach Anspruch 1, dadurch gekennzeichnet, daß die Rohre (12) und die Wärmeübertragungselemente (14) als Strangpress- oder -gußprofil ausgebildet oder extrudiert sind.

3. Konvektor nach Anspruch 2, dadurch gekennzeichnet, daß alle Rohre (12) und alle Wärmeübertragungselemente (14) eines Konvektors (10) als ein einziges Profil ausgebildet sind.

4. Konvektor nach einem der vorhergehenden Ansprüche, dadurch gekennzeichnet, daß die Wärmeübertragungselemente (14) als Lamellen ausgebildet sind, die sich im wesentlichen senkrecht von den Rohren (12) nach oben und nach unten erstrecken.

5. Konvektor nach einem der vorhergehenden Ansprüche, dadurch gekennzeichnet, daß einander benachbarte Rohre (12) abwechselnd im oberen Bereich und im unteren Bereich des Konvektors (10) angeordnet sind.

6. Konvektor nach einem der vorhergehenden Ansprüche, dadurch gekennzeichnet, daß eine Abdeckung oben an dem Konvektor (10) ausgebildet ist, die ebenfalls einstückig mit den Wärmeübertragungselementen (14) ausgebildet ist.

7. Konvektor nach Anspruch 6, dadurch gekennzeichnet, daß die Abdeckung (22) Durchbrechungen (24) aufweist, die durch spanende oder umformende Bearbeitung der oberen Abdeckwand (22) erzeugt sind und insbesondere sich länglich und im wesentlichen parallel zu den Rohren (12) erstrecken.

8. Konvektor nach einem der vorhergehenden Ansprüche, dadurch gekennzeichnet, daß die Abdeckung (22) sich von einer Befestigungswand des Konvektors (10) zu einer Vorderwand (26) des Konvektors (10) erstreckt und insbesondere im Übergangsbereich zur Vorderwand (10) konvex gerundet ist.

9. Konvektor nach einem der vorhergehenden Ansprüche, dadurch gekennzeichnet, daß sich die Vorderwand des Konvektors (10) einstückig an die Abdeckwand (22) anschließt und insbesondere gewellt ist.

10. Konvektor nach einem der vorhergehenden Ansprüche, dadurch gekennzeichnet, daß ein Abstandshalter (32) vorgesehen ist, mit welchem insbesondere im unteren oder mittleren Bereich der länglichen Wärmeübertragungselemente (14) der seitliche Abstand der Wärmeübertragungselemente (14) festlegbar ist, wobei der Abstandshalter (32) insbesondere die Wärmeübertragungselemente (14) und die in deren Verlauf angeordneten Rohre (12) lagert.

11. Konvektor nach einem der vorhergehenden Ansprüche, dadurch gekennzeichnet, daß ein Abstandshalter (32) einstückig mit den Wärmeübertragungselementen (14), insbesondere etwa in der Mitte deren Hohe, ausgebildet ist.

12. Konvektor nach einem der vorhergehenden Ansprüche, dadurch gekennzeichnet, daß die Wärmeübertragungselemente (14) in Längsrichtung verlaufende und sich in im wesentlichen senkrechter Richtung erstreckende, von einer Kreisform abweichende Durchtrittsausnehmungen aufweisen, die Rohre (12) bilden.

13. Konvektor nach einem der vorhergehenden Ansprüche, dadurch gekennzeichnet, daß die Wärmeübertragungselemente (14) in ihrem oberen Ausströmbereich zur Befestigungswand hin weisen.

14. Konvektor nach einem der vorhergehenden Ansprüche, dadurch gekennzeichnet, daß der Konvektor (10) im Fußraum seitlich unten anschließend an eine die Befestigungswand bildende Außenwand eines Fahrzeugs unter Bildung eines Ansaugspalts (18) beabstandet von dem Fußboden montiert ist.
